# EUROPÄISCHE PATENTSCHRIFT

(11) **EP 2 559 479 B1**
(45) Veröffentlichungstag und Bekanntmachung des Hinweises auf die Patenterteilung: **16.10.2013**
(21) Anmeldenummer: 11006794.9
(22) Anmeldetag: 19.08.2011
(51) Int. Cl.: B01F 5/06, C02F 1/34

(54) **Wasserbehandlungsgerät zur Abtötung von Organismen und Verfahren zur Behandlung von Meerwasser**
Water treatment device for annihilation of organisms and method for treating sea water
Appareil de traitement de l'eau pour supprimer des organismes et procédé de traitement d'eau de mer

(43) Veröffentlichungstag der Anmeldung: 20.02.2013
(73) Patentinhaber: J&B Marine Equipment & Service GmbH, 22399 Hamburg (DE)
(72) Erfinder: Mamerow, Bernd, 22339 Hamburg (DE); Seehuusen, Jan, 42676 Vaestra Froelunda (SE)
(74) Vertreter: Kossak, Sabine

(56) Entgegenhaltungen:
- EP-A2- 1 975 130
- WO-A1-93/15818
- WO-A1-2005/030659
- DE-U1-202005 000 875

## Beschreibung

Gegenstand der Erfindung ist ein Wasserbehandlungsgerät, umfassend ein Wassermahlwerk und eine Pumpvorrichtung, wobei das Wassermahlwerk einen Rotor und einen Stator aufweist, deren Durchmesser sich in Strömungsrichtung zum Austritt vergrößert und Rotor und Stator einen Ringspalt bilden. Weiterhin ist Gegenstand der Erfindung ein Verfahren zur Behandlung und Aufbereitung von Seewasser, bevorzugt Ballastwasser auf Schiffen.

Zur Aufbereitung von Wasser sind eine Vielzahl von Verfahren bekannt. Üblicherweise erfolgt die Aufbereitung von Wasser mechanisch z.B. durch Filtration oder Ultraschall, chemisch z.B. durch Chlor oder Sauerstoff oder biologisch. Während chemische Verfahren den Nachteil haben, dass zusätzliche Stoffe eingesetzt werden müssen, die ihrerseits teils selbst wieder umweltschädlich sind, sind viele mechanische Verfahren mit einem hohen apparativen Aufwand und hohem Energieeintrag verbunden. Die Verfahren sind dadurch häufig recht kostenintensiv und lassen sich nur in Bereichen durchführen, bei denen Platz und Energiebedarf weniger relevant sind.

Jyoti und Pandit beschreiben eine Reihe mechanischer Wasseraufbereitungsverfahren, bei denen die Desinfektion durch Kaviatation erfolgt ( K.K. Jyoti, A.B. Pandit, Biochemical Engineering Journal, Bd. 7, 2001, S. 201-212). Durch Kavitaion lässt sich dabei eine effizenze Abtötung ohne Einsatz zusätzlicher Chemikalien erreichen. Allerdings wird nur bei Einsatz hoher Drücke von z.B. 69 -689 bar ein zufriedenstellendes Ergebnis erreicht, was mit entsprechend apparativen Aufwand und hohem Energieverbrauch einher geht.

Neben der Wasseraufbereitung, beispielsweise in Kläranlagen oder der Industrie, trifft dieses Problem auch für die Wasseraufbereitung von Seewasser, insbesondere Ballastwasser zu. Gemeinsam mit dem Ballastwasser werden Organismen aufgenommen. Diese werden, wenn das Ballastwasser abgelassen wird, wieder in das Gewässer abgegeben. Durch den mittlerweile sehr weit verzweigten internationalen Schiffsverkehr findet eine starke Einschleppung von fremden Organismen in die Gewässer statt. Um den Wasseraustausch bei der Aufnahme und dem Ablassen von Ballastwasser zu regeln, wurde mittlerweile das Ballastwasser-Übereinkommen verabschiedet. Entsprechend muss Ballastwasser an Bord des Schiffes behandelt werden bevor es wieder in das Gewässer abgegeben wird, um zu verhindern, dass fremde Organismen eingeschleppt werden.

Ein Verfahren zur Entkeimung von Ballastwasser ist aus der EP 1 975 130 A2 bekannt. Das Ballastwasser wird dabei durch einen mit einem Rotor und einem Stator versehenen Homogenisator transportiert. Durch die dort entstehenden Scherkräfte und die Kavitation werden die im Ballastwasser enthaltenen Mikroorganismen abgetötet. Über einen Homogenisator entsteht dabei allerdings ein Druckverlust, so dass je nach angelegtem Druck nicht mehr die für eine ausreichende Kavitation notwendige Strömungsgeschwindigkeit aufrecht erhalten wird.

Aufgabe der Erfindung ist es daher, ein Gerät zur Wasseraufbereitung bereitzustellen, das die oben genannten Nachteile nicht aufweist, insbesondere auch bei geringen Wasserdrücken eine ausreichende Strömungsgeschwindigkeit zu einer effektiven Abtötung von Lebewesen und Organismen, insbesondere Mikroorganismen führt, ohne dass hierfür hohe Energiemengen eingetragen oder zusätzliche teils umweltschädliche Stoffe verwendet werden müssen.

Die Aufgabe wird erfindungsgemäß gelöst durch ein Wasserbehandlungsgerät umfassend ein Wassermahlwerk und eine Pumpvorrichtung, wobei das Wassermahlwerk einen Rotor und einen Stator aufweist, deren Durchmesser d sich in Strömungsrichtung zum Austritt vergrößert, und Rotor und Stator einen Ringspalt bilden, dadurch gekennzeichnet, dass sich die Verzahnungstiefe und der Ringspalt in Strömungsrichtung zum Austritt verjüngt, der Ringspalt am Austritt bevorzugt eine Breite von 2 µm bis 20 µm aufweist, der Rotor und der Stator jeweils eine Kreuzverzahnung auf der Oberfläche haben, die bei Rotor und Stator gegenläufig angeordnet ist, und der Stator im Bereich des Austritts anstelle der Kreuzverzahnung einen Diffusorring aufweist.

Weiterhin wird die Aufgabe gelöst durch ein Verfahren zur Wasseraufbereitung, umfassend mindestens die Schritte
a. Eintreten des Wassers in einen Vorratsbehälter,
b. Pumpen des Wassers unter Druckaufbau zu einer Vorreinigungsstufe, bevorzugt einem Filter,
c. physikalisch-mechanische Voreinigung des Wassers in der Vorreinigungsstufe,
d. Behandeln des Wassers in einem erfindungsgemäßen Wasserbehandlungsgerät, wobei die im Wasser befindlichen Mikroorganismen abgetötet werden, und
e. Transport des Wassers in einen weiteren Vorratsbehälter.

Weitere Ausführungsformen sind Gegenstand der Unteransprüche oder nachfolgend beschrieben.

Das erfindungsgemäße Wasserbehandlungsgerät erlaubt auch bei geringen Wasserdrücken eine effektive Abtötung von Lebewesen und Mikroorganismen. Die Organismen werden mechanisch zermahlen bzw. durch Ankratzen oder Zertrennen der Zellwände an den Verzahnungen von Rotor und Stator so beschädigt, dass sie absterben. Zudem wird durch die Kavitation beim Austritt am Ringspalt und die dadurch bedingte schlagartige Druckentlastung oder Implosion eine weitere Abtötung erreicht.

Unter Organismen werden erfindungsgemäß die in Wasser, insbesondere in Seewasser vorkommenden Lebewesen und Mikroorganismen verstanden, wie z.B. Algen, Pilze, Bakterien, Einzeller, kleine Fische, Krebstiere und Planktonorganismen.

Das erfindungsgemäße Wasserbehandlungsgerät weist ein Wassermahlwerk aus einem Rotor und einem Stator auf. Die Oberflächen sowohl von Rotor als auch Stator sind kreuzverzahnt oder chaotisch verzahnt, bevorzugt kreuzverzahnt. Die Verzahnungstiefe am Rotor verjüngt sich in Strömungsrichtung zum Austritt bevorzugt auf Null und am Stator in Strömungsrichtung zum Diffusorring bevorzugt auf Null. Die Zahnzahl und der Zahnabstand hängen dabei vom Durchmesser ab. Die Abstände werden so gewählt, dass die gewünschte Verwirbelung entsteht. Durch die gegenläufige Verzahnung der beiden Oberflächen entsteht ein Scherspalt, in dem die beiden Zahnungen bei jedem Umlauf ineinander schneiden. Bevorzugt verringern sich die Verzahnungstiefe und der Ringspalt in Strömungsrichtung zum Austritt hin, so dass durch die veränderte Wirbelzone das Wasser ständig turbulent verwirbelt wird. Aufgrund der turbulenten Verwirbelung werden die im Wasser befindlichen Organismen zwischen den Oberflächen von Rotor und Stator, den sogenannten Mahlflächen, einem Schneide- und Reißeffekt ausgesetzt. Sie werden sowohl mechanisch zermahlen als auch an den Oberflächen angeschnitten bzw. angerissen, wobei die Zellwand mechanisch so zerstört wird, dass die Organismen absterben.

Der Durchmesser sowohl des Rotors als auch des Stators vergrößert sich in Strömungsrichtung zum Austritt hin, so dass Rotor und Stator bevorzugt eine konische Form aufweisen. Durch die Vergrößerung des Durchmessers wird die Flüssigkeit entlang des abnehmenden Ringspalts beschleunigt. Die Mahlflächen bilden einen eng zulaufenden Ringspalt, der am Austritt eine Breite von vorzugsweise 2 bis 20 µm, weiter bevorzugt 2 bis 10 µm und besonders bevorzugt 5 µm, hat. Bevorzugt weist der Rotor eine Antriebswelle auf, die über einen Elektromotor angetrieben wird.

Infolge der auf die Organismen wirkenden Scherkräfte werden diese bei der Durchströmung des Wassermahlwerks mechanisch zerstört. Dieser Effekt verstärkt sich mit zunehmender Reduzierung des Abstands zwischen Rotor und Stator und somit abnehmender Breite des Ringspaltes. Die Strömungsgeschwindigkeit nimmt entlang des Ringspaltes stark zu und der Druck im geförderten Medium steigt. Infolge der hohen Strömungsgeschwindigkeiten und hohen wirkenden Drücke an der Stelle des geringsten Abstands zwischen Rotor und Stator am Austritt und der sich unmittelbar daran anschließenden großen Querschnittserweiterung im Bereich des Austragtellers treten Kavitationserscheinungen auf.

Die Abtötung der Organismen erfolgt somit zum einen durch das mechanische Zermahlen bzw. Ankratzen und Zertrennen im Bereich von Rotor und Stator und zum anderen durch die Kavitation beim Austritt am Ringspalt. Die Organismen werden zerstört oder zumindest so beschädigt, dass sie absterben.

Im Bereich des Austritts weist der Stator auf seiner Oberfläche zudem einen Diffusorring auf. Der Diffusorring wird bevorzugt durch ein eingeprägtes, chaotisches Muster auf der Oberfläche des Stators gebildet, besonders bevorzugt durch punktuelle Erhebungen auf der Oberfläche. Durch das eingeprägte enge Muster mit auf kleiner Fläche vielen Unebenheiten auf der Oberfläche sorgt der Diffusorring für eine zusätzliche verstärkte Verwirbelung, die ein nochmaliges Zermahlen der Organismen bewirkt. Zudem unterstützt die zusätzliche Verwirbelung die Kavitationsbildung am Austritt des Wassermahlwerks. Der Rotor weist bevorzugt in dem dem Diffusorring gegenüberliegenden Bereich keine Verzahnung oder Einkerbung auf.

Am Ringspaltaustritt des erfindungsgemäßen Wasserbehandlungsgerätes, bevorzugt an der Abrisskante, werden die Lokalgeschwindigkeiten der Wassertröpfchen derart erhöht, dass diese eine überkritische Geschwindigkeit erreichen. Infolge der dann erfolgenden schlagartigen Querschnittserweiterung im Bereich des Austragtellers reißen die Wassertröpfchen ab und kavitieren. Es entstehen im direkten Umfeld Druckwellen von 20.000 Hz und höher, mit hoher Intensität von bis zu 1.000 W pro cm². Die Wassertröpfchen und die darin enthaltenen Organismen implodieren infolge des starken Druckgefälles. Die Organismen werden dabei abgetötet bzw. ihre Zellwände werden so zerstört, dass sie absterben. Dieser Vorgang ist etwa vergleichbar mit dem Effekt, der beim schlagartigen Auftauchen eines Tauchers aus großer Wassertiefe entsteht.

Bei dem Betrieb einer Strömungsmaschine, wie sie erfindungsgemäß in Form des Wassermahlwerks vorliegt, treten üblicherweise Druckverluste auf. Diese Druckverluste sind unerwünscht, da der verbleibende Systemdruck für den eigentlichen Betrieb teilweise nicht mehr ausreicht. Insbesondere an Bord von Schiffen bei der Aufbereitung von Ballastwasser steht nur ein geringer Betriebsdruck von 1 bis 3 bar zur Verfügung.
Die Druckverluste werden beim erfindungsgemäßen Wasserbehandlungsgerät durch eine Pumpvorrichtung ausgeglichen, bevorzugt eine interne Pumpvorrichtung. Das erfindungsgemäße Wasserbehandlungsgerät hat den Vorteil gegenüber üblichen Kavitationsgeräten, wie z.B. Düsen, dass keine externen Jetpumpen mit hohem Druck oder Ultraschallgeneratoren, die aktiv Ultraschallenergie in die Flüssigkeit eintragen, notwendig sind. Die hierfür sehr hohen elektrischen Leistungen für den Energieeintrag können somit vermieden werden und der apparative und energetische Aufwand für das erfindungsgemäße Wasserbehandlungsgerät ist somit deutlich geringer als bei herkömmlichen Geräten.

Die interne Pumpvorrichtung besteht bevorzugt aus einem Flügelrad am Eintritt des Wassermahlwerks und einem Austragsflügel am Austritt des Wassermahlwerks. Das Flügelrad ist als zusätzlicher Flügel im unteren Bereich des Rotors platziert. Durch die Pumpwirkung des Flügelrads wird der Druck des eintretenden Wassers erhöht und die erforderliche Strömungsgeschwindigkeit erreicht.

Zusätzlich wird bevorzugt am Austritt des Wasserbehandlungsgerätes ein Austragsflügel am Austragteller befestigt, der den nach der Abrisskante auftretenden Druckabfall kompensiert. Wassermahlwerk und interne Pumpvorrichtung bilden somit bevorzugt eine bauliche Einheit.

Die interne Pumpvorrichtung hat den Vorteil, dass das Wasserbehandlungsgerät den Systemdruck nicht negativ beeinflusst und keine zusätzlichen externen Pumpen erforderlich sind.

Die Beschleunigung und Erzeugung des gewünschten Druckgradienten wird in der Ausführungsform mit der internen Pumpvorrichtung am Eintritt des Mahlwerks mit dem auf dem Rotor montierten Flügelrad gestartet und weiter durch den keilförmig im Durchmesser größer werdenden Rotor und Stator sowie die axiale Beschleunigung des Wassers an den Kerbenden erzeugt. Aufgrund der Verzahnung von Rotor und Stator wird das Wasser beim Durchlaufen des schmaler werdenden Ringspalts abgebremst und wieder beschleunigt bis zu einer überkritischen Geschwindigkeit und dem nachfolgenden Abreißen und Kavitieren des Wassers am Austritt des Ringspalts.

Die erforderliche Durchdringung und damit die erforderliche niedrige Leistungsdichte der Kavitation sind wegen des geringen Spaltes von nur wenigen µm gering. Die Intensität der Druckwellen ist jedoch ausreichend, um die Tötung der im Wasser enthaltenen Organismen sicherzustellen. Hierin liegt ein Vorteil des erfindungsgemäßen Wasserbehandlungsgeräts gegenüber aktiven Ultraschallgeneratoren. Bei diesen sind sehr hohe Leistungen und somit ein hoher Energiebedarf notwendig, um eine zur Abtötung der Organismen annähernd akzeptable Durchdringung zu erreichen. Vielfach wird diese jedoch auch bei hohen Leistungen nicht erreicht.

Das erfindungsgemäße Wasserbehandlungsgerät und das erfindungsgemäße Verfahren lassen sich besonders effektiv bei Seewasser und insbesondere Ballastwasser anwenden. Beim Einsatz auf Schiffen weist das durch die physikalisch-mechanische Vorreinigungsstufe gepumpte Wasser häufig nur einen geringen Wasserdruck auf. Der Einsatz von zusätzlichen externen Pumpen ist häufig problematisch, da hierfür zusätzliche Energiemengen bereitgestellt werden müssten. Bei Verwendung des erfindungsgemäßen Wasserbehandlungsgerätes mit einer internen Pumpvorrichtung sind keine zusätzlichen Pumpen notwendig und somit auch kein zusätzlicher Energieverbrauch auf dem Schiff gegeben.

Bevorzugt ist der Stator mittels mindestens einem Befestigungsmittel an einer Grundplatte befestigt, wobei der Stator radial verschiebbar an der Grundplatte befestigt ist. Um den sehr schmalen Ringspalt von wenigen µm einstellen zu können, ist eine exakte Ausrichtung zwischen Rotor und Stator notwendig. Dieses wird konstruktiv durch einen radial verschiebbaren Stator gegen den Rotor realisiert. Der Stator wird auf eine Grundplatte gesetzt und auf dieser zunächst nur soweit fixiert, dass er innerhalb gewisser Grenzen verschiebbar ist. In einem ersten Schritt wird der Stator durch Hineinschieben des Rotors bis zum Anschlag exakt zentriert. Der Rotor wird dann in einem zweiten Schritt um eine definierte Länge axial herausgehoben, so dass sich auch sehr kleine Ringspalte realisieren lassen. Der Stator wird dann final fixiert, so dass keine weitere Verschiebung möglich ist. Durch diese Bauweise sind beliebig geringe Ringspalte möglich, die nur von der Fertigungsgenauigkeit der Bauteile abhängig sind.

Das erfindungsgemäße Verfahren wird bevorzugt zur Wasseraufbereitung von Seewasser, insbesondere Ballastwasser genutzt. Das Seewasser tritt an Bord des Schiffes in einen Seekasten ein. Es wird dann mittels einer Ballastwasserpumpe in Richtung einer physikalisch-mechanischen Vorreinigungsstufe gepumpt. Ballastwasserpumpen an Bord von Schiffen arbeiten mit niedrigen Betriebsdrücken von 1,5 bis 3 bar, bevorzugt 2 bar. Das Wasser wird gefiltert, um es von Sedimenten und groben Partikeln zu befreien. Beim Durchströmen der Vorreinigungsstufe tritt ein Druckverlust auf, so dass der Wasserdruck hinter der Vorreinigung geringer ist als vor dem Filter. Damit der Druck bzw. die Strömungsgeschwindigkeit des Wassers im Wasserbehandlungsgerät hoch genug ist, das Kavitation auftritt, wird eine externe Pumpe oder bevorzugt eine interne Pumpvorrichtung eingesetzt, die das Wasser wieder auf die entsprechende Strömungsgeschwindigkeit bzw. den entsprechenden Druck bringt. Im Wasserbehandlungsgerät werden die im Wasser befindlichen Organismen abgetötet.

Die physikalisch-mechanische Vorreinigungsstufe ist bevorzugt ein Filter, eine Filtrationsanlage oder ein Hydrozyklon. Erfindungsgemäß können aber auch andere Vorrichtung eingesetzt werden, die mit physikalisch-mechanischen Methoden Verunreinigungen und Organismen aus dem Wasser abtrennen.

In einer Ausführungsform wird das im Wasserbehandlungsgerät gereinigte Wasser in einem weiteren Verfahrensschritt zusätzlich gereinigt. Die zusätzliche Reinigung/Nachbehandlung kann mittels biologischer Verfahren, wie z.B. UV-Bestrahlung, chemischer Verfahren, wie der Dosierung von keimtötenden Mitteln oder weiteren mechanischen Verfahren erfolgen. Das so gereinigte Wasser wird dann in einen weiteren Vorratsbehälter, bei der Reinigung von Seewasser an Bord von Schiffen in den Ballastwassertank, transportiert.

Die Erfindung wird anhand der Figuren näher erläutert. Es zeigen
- **Figur 1**: den Aufbau eines erfindungsgemäßen Wasserbehandlungsgerätes mit interner Pumpvorrichtung,
- **Figur 2**: eine Teilansicht eines erfindungsgemäßen Wassermahlwerkes mit aus dem Stator herausgezogenem Rotor und
- **Figur 3**: den Ablauf des erfindungsgemäßen Verfahrens.

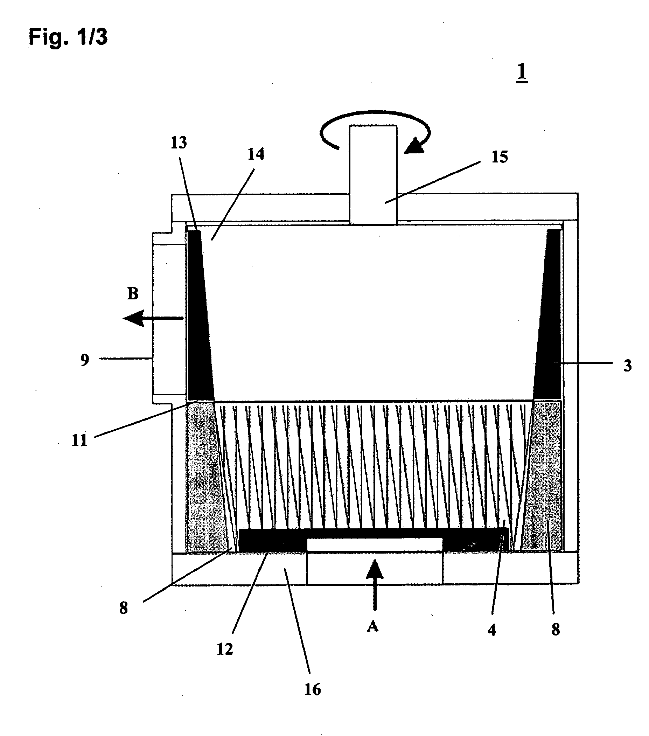

Figur 1 zeigt das erfindungsgemäße Wasserbehandlungsgerät 1 aus einem Wassermahlwerk 2 und einer internen Pumpvorrichtung 3. Das Wassermahlwerk 2 und die Pumpvorrichtung 3 bilden hier eine bauliche Einheit. Das Wasser tritt entlang des Pfeils A in das Wasserbehandlungsgerät 1 ein. Es wird dort von dem Flügelrad 12, das sich an der Unterseite des Rotors 4 befindet, zusätzlich beschleunigt und in den Ringspalt 8 transportiert. Der Ringspalt 8 wird vom Rotor 4 und Stator 5 gebildet. Es ist erkennbar, dass der Ringspalt 8 sich entlang der Strömungsrichtung des Wassers verringert. Das Wasser fließt am Ende des Ringspalts 8 über die Abrisskante 11. Durch die starke Vergrößerung des Querschnitts entsteht eine Kavitation. Das Wasser wird in Richtung des Austritts 9 zusätzlich durch die Austragsflügel 13, die am Leitteller 14 befestigt sind, beschleunigt. Der Rotor 4 sowie der Leitteller 14 werden über eine Antriebswelle 15 angetrieben. Das Wasser tritt entlang des Pfeils B aus dem Wasserbehandlungsgerät 1 gesäubert aus. Die Antriebswelle 15 ist mit einem nicht dargestellten Elektromotor verbunden. Ebenfalls nicht dargestellt ist die Befestigung des Stators 5 an der Grundplatte 16. Die Befestigung kann beispielsweise durch in der Grundplatte 16 eingelassene Schrauben, die in Langlöchern montiert sind, erfolgen.

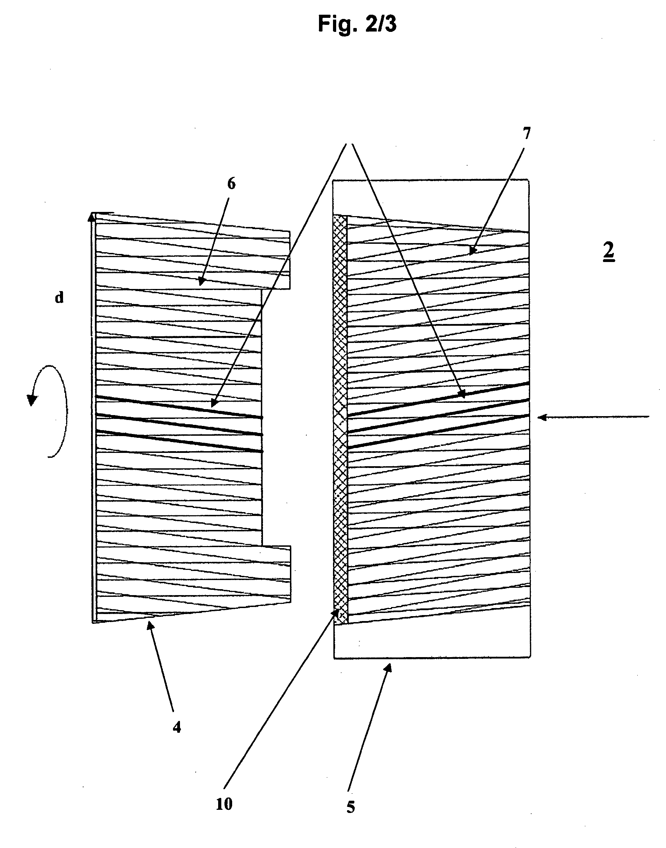

Figur 2 zeigt im Detail eine Ausführungsform des Rotors 4 und des Stators 5 des Wassermahlwerks 2. Die Oberfläche 6 des Rotors 4 und die Oberfläche 7 des Stators 5 weisen jeweils Einkerbungen als Verzahnung auf. Die Verzahnungen bzw. Einkerbungen von Rotor 4 und Stator 5 sind dabei erkennbar gegenläufig. Der Rotor 4 ist hier aus dem Stator 5 herausgezogen dargestellt.

Der Stator 5 weist am oberen Ende einen Diffusorring 10 auf. Im Bereich des Diffusorrings 10 sind eine Vielzahl von kleinen, sehr feinen Einkerbungen angeordnet, die hier nur schematisch dargestellt sind. Der Rotor 4 weist in dem dem Diffusorring 10 gegenüberliegenden Bereich keine Einkerbungen oder Verzahnungen auf, da die Verzahnung hier auf Null gelaufen ist. In dem Bereich, in dem Rotor 4 und Stator 5 den größten Durchmesser d haben, ist die Abrisskante 11 angeordnet.

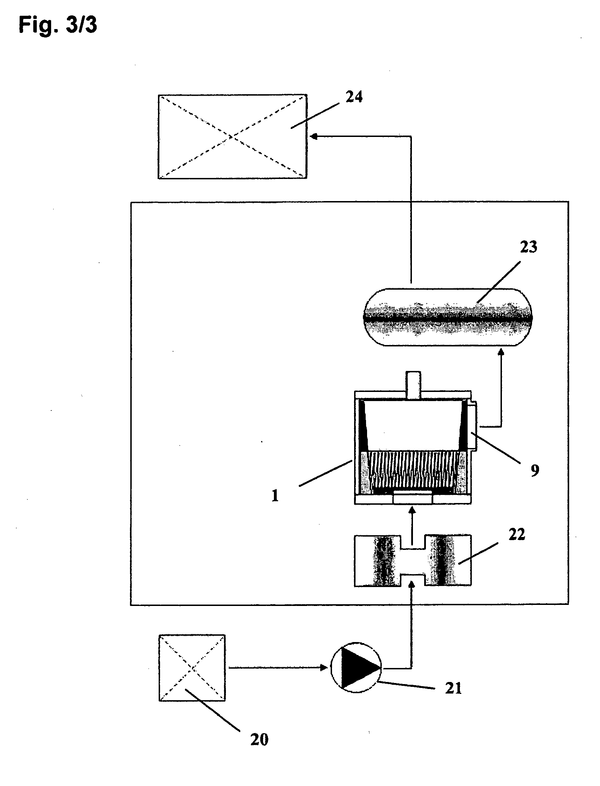

Figur 3 zeigt den schematischen Ablauf des erfindungsgemäßen Verfahrens. Seewasser tritt in einen Seekasten 20 ein. Mittels einer Ballastwasserpumpe 21 wird das Wasser durch einen Filter 22 gepumpt und dort von Sedimenten und größeren Organismen befreit. Das Wasser tritt nun mit geringerem Druck in das Wasserbehandlungsgerät 1, das hier mit interne Pumpvorrichtung ausgerüstet ist, ein. Dort wird es mechanisch gereinigt und der Druck wieder auf Betriebsdruck von 2 bar erhöht. Das Wasser wird dann hier beispielhaft einer Nachbehandlung 23 unterzogen. Anschließend wird es in den Ballastwassertank 24 transportiert. Alternativ kann das Wasser auch direkt vom Wasserbehandlungsgerät 1 in den Ballastwassertank 24 transportiert werden.

### Bezugszeichenliste

- 1: Wasserbehandlungsgerät
- 2: Wassermahlwerk
- 3: Pumpvorrichtung
- 4: Rotor
- 5: Stator
- 6: Oberfläche Rotor
- 7: Oberfläche Stator
- 8: Ringspalt
- d: Durchmesser
- 9: Austritt
- 10: Diffusorring
- 11: Abrisskante
- 12: Flügelrad
- 13: Austragsflügel
- 14: Leitteller
- 15: Antriebswelle
- 16: Grundplatte

- 20: Seekasten
- 21: Ballastwasserpumpe
- 22: Filter
- 23: Nachbehandlung
- 24: Ballastwassertank

## Patentansprüche

1. Wasserbehandlungsgerät (1) umfassend ein Wassermahlwerk (2) und eine Pumpvorrichtung (3), wobei das Wassermahlwerk (2) einen Rotor (4) und einen Stator (5) aufweist, deren Durchmesser d sich in Strömungsrichtung zum Austritt vergrößert, und Rotor (4) und Stator (5) einen Ringspalt (8) bilden, **dadurch gekennzeichnet, dass**
- sich die Verzahnungstiefe und der Ringspalt (8) in Strömungsrichtung zum Austritt (9) verjüngt,
- der Rotor (4) und der Stator (5) jeweils eine Kreuzverzahnung auf der Oberfläche (6, 7), die bei Rotor (4) und Stator (5) gegenläufig angeordnet ist oder ein chaotisches Muster auf der Oberfläche (6,7) haben und
- der Stator (5) im Bereich des Austritts anstelle der Kreuzverzahnung oder des chaotischen Musters einen Diffusorring (10) aufweist.

2. Wasserbehandlungsgerät (1) gemäß Patentanspruch 1, **dadurch gekennzeichnet, dass** der Diffusorring (10) ein eingeprägtes, chaotisches Muster auf der Oberfläche (7) aufweist, bevorzugt punktuelle Erhebungen auf der Oberfläche (7).

3. Wasserbehandlungsgerät (1) gemäß Anspruch 1 oder 2, **dadurch gekennzeichnet, dass** das Wassermahlwerk (2) hinter dem Ringspalt (8) eine Abrisskante (11) aufweist.

4. Wasserbehandlungsgerät (1) gemäß einem der vorhergehenden Ansprüche, **dadurch gekennzeichnet, dass** der Ringspalt (8) am Austritt (9) eine Breite von 2 µm bis 20 µm, bevorzugt 2 µm bis 10 µm aufweist.

5. Wasserbehandlungsgerät (1) gemäß einem der vorhergehenden Ansprüche, **dadurch gekennzeichnet, dass** der Stator (5) mittels mindestens eines Befestigungsmittels an einer Grundplatte befestigt ist, wobei der Stator (5) radial verschiebbar an der Grundplatte befestigt ist.

6. Wasserbehandlungsgerät (1) gemäß einem der vorhergehenden Ansprüche, **dadurch gekennzeichnet, dass** die Pumpvorrichtung (3) eine externe oder interne Pumpvorrichtung oder eine Kombination aus beidem, bevorzugt ausschließlich eine interne Pumpvorrichtung ist.

7. Wasserbehandlungsgerät (1) gemäß Anspruch 6, **dadurch gekennzeichnet, dass** die interne Pumpvorrichtung aus einem Flügelrad (12) am Eintritt und/oder einem Austragsflügel (13) am Austritt (9) besteht, wobei sich der Austragsflügel (13) über den Umfang des Austrittstellers (14) erstreckt.

8. Wasserbehandlungsgerät (1) gemäß einem der vorhergehenden Ansprüche, **dadurch gekennzeichnet, dass** die Verzahnungstiefe am Rotor (4) sich in Strömungsrichtung zum Austritt (9) auf Null verjüngt und/oder am Stator (5) sich in Strömungsrichtung zum Diffusorring auf Null verjüngt.

9. Wasserbehandlungsgerät (1) gemäß einem der vorhergehenden Ansprüche, **dadurch gekennzeichnet, dass** der Rotor (4) eine Antriebswelle (16) aufweist und über einen Antriebsmotor, vorzugsweise Elektromotor (15) angetrieben wird.

10. Verfahren zur Wasseraufbereitung, umfassend mindestens die Schritte
a. Eintreten des Wassers in einen Vorratsbehälter,
b. Pumpen des Wassers unter Druckaufbau zu einer physikalisch-mechanischen Vorreinigungsstufe,
c. physikalisch-mechanische Voreinigung des Wassers in der Vorreinigungsstufe,
d. Behandeln des Wassers in einem Wasserbehandlungsgerät gemäß einem der Ansprüche 1 bis 9, wobei die im Wasser befindlichen Organismen abgetötet werden, und
e. Transport des Wassers in einen weiteren Vorratsbehälter.

11. Verfahren gemäß Anspruch 10, **dadurch gekennzeichnet, dass** in einem weiteren Schritt f. vor dem Transport (e.) in den Wasserbehälter eine physikalische, chemische und/oder biologische Nachbehandlung des Wassers stattfindet.

12. Verfahren gemäß einem der Ansprüche 10 oder 11, **dadurch gekennzeichnet, dass** Seewasser, bevorzugt Ballastwasser, behandelt wird.

13. Verfahren gemäß einem der Ansprüche 10, 11 oder 12, **dadurch gekennzeichnet, dass** das Wasser im Schritt a. in einen Seekasten transportiert und im Schritt e. in einen Ballastwassertank transportiert wird oder im Schritt a. in einen Ballastwassertank und im Schritt e. in einen Seekasten transportiert wird.

14. Verfahren gemäß einem der Ansprüche 10 bis 13, **dadurch gekennzeichnet, dass** die physikalisch-mechanische Vorreinigungsstufe ein Filter, eine Filtrationsanlage oder ein Hydrozyklon ist.

## Claims

1. Water treatment device (1) comprising a water treatment grinder (2) and a pumping device (3), where the water treatment grinder (2) has a rotor (4) and a stator (5), the diameter d of which increases in the direction of flow towards the discharge opening, and where rotor (4) and stator (5) form an annulus, **characterised in that**
- the depth of engagement of the gears and the annulus (8) become reduced in the direction of flow towards the discharge opening (9),
- the rotor (4) and the stator (5) each have a surface with cross cut gearing on the surface (6,7) that runs in opposite directions on the rotor (4) and the stator (5) or a random surface pattern (6, 7), and
- that the stator (5) has a diffuser ring (10) in the area of the discharge opening in place of the cross cut gearing or the random pattern.

2. Water treatment device (1) in accordance with Claim 1, **characterised in that** the diffuser ring (10) has a surface (7) with an embossed, random pattern, preferably in the form of point-like projections on the surface (7).

3. Water treatment device (1) in accordance with Claim 1 or 2, **characterised in that** the water treatment grinder (2) has a tear-off edge (11) after the annular gap (8).

4. Water treatment device (1) in accordance with one of the preceding claims, **characterised in that** the annular gap (8) has a width at its outlet (9) of 2 µm to 20 µm, preferably 2 µm to 10 µm.

5. Water treatment device (1) in accordance with one of the preceding Claims. **characterised in that** the stator (5) is fastened to a base plate by at least one means of attachment, where the stator (5) fastening on the base plate is such that the stator can slide in radial direction.

6. Water treatment device in accordance with one of the preceding Claims, **characterised in that** the pumping device (3) is an external or internal pumping device or a combination of the two, preferably exclusively an internal pumping device.

7. Water treatment device (1) in accordance with Claim 6, **characterised in that**, the internal pumping device consists of an impeller wheel (12) at the inlet and/or a discharge blade (13) at the outlet (9), where this discharge blade (13) extends over the periphery of the discharge plate (14).

8. Water treatment device (1) in accordance with one of the preceding Claims, **characterised in that**, at the rotor (4) the depth of engagement of the gearing tapers to zero in the direction of flow towards the discharge opening (9) and/or, at the stator (5), tapers to zero in the direction of flow towards the diffuser ring.

9. Water treatment device in accordance with one of the preceding Claims, **characterised in that** the rotor (4) has a drive shaft (16) and is driven by a drive motor, preferably an electric motor (15).

10. Process for water treatment comprising at least the stages
**a.** water entry into a storage reservoir,
**b.** pumping of the water with a build-up of pressure to a physical/mechanical pre-cleaning stage,
**c.** physical/mechanical pre-cleaning of the water in the pre-cleaning stage,
**d.** treatment of the water in a water treatment device in accordance with one of Claims 1 to 9, when the organisms present in the water are killed, and
**e.** water transfer into a further storage reservoir,

11. Process in accordance with Claim 10, **characterised in that**, in an additional stage **f.** preceding the water transfer (**e.)** into the storage reservoir, a physical, chemical and/or biological post-treatment process of the water takes place.

12. Process in accordance with one of Claims 10 or 11, **characterised in that** sea water, in preference ballast water, is treated.

13. Process in accordance with one of Claims 10, 11 or 12, **characterised in that** in stage **a.** the water is transported into a sea container and in stage **e.** into a ballast water tank, or in stage **a.** into a ballast water tank and in stage **e.** into a sea container.

14. Process in accordance with one of Claims 10 to 13, **characterised in that** the physical/mechanical pre-cleaning stage consists of a filter, a filtration plant or a hydrocyclone.

## Revendications

1. Appareil de traitement de l'eau (1) comprenant un broyeur à eau (2) et un dispositif de pompage (3), dans lequel le broyeur à eau (2) comporte un rotor (4) et un stator (5) dont le diamètre d augmente dans la direction d'écoulement vers la sortie, et dans lequel rotor (4) et stator (5) forment une fente annulaire (8), **caractérisé en ce que**
- la profondeur de denture et la fente annulaire (8) diminuent dans la direction d'écoulement vers la sortie (9),
- le rotor (4) et le stator (5) possèdent chacun, sur la surface (6, 7), une denture croisée qui est disposée en sens contraire sur le rotor (4) et le stator (5), ou un motif chaotique sur la surface (6, 7) et
- le stator (5) présente un anneau diffuseur (10) à la place de la denture croisée ou du motif chaotique dans la zone de la sortie.

2. Appareil de traitement de l'eau (1) selon la revendication 1, **caractérisé en ce que** l'anneau diffuseur (10) présente un motif chaotique estampé sur la surface (7), de préférence des reliefs ponctuels sur la surface (7).

3. Appareil de traitement de l'eau (1) selon la revendication 1 ou 2, **caractérisé en ce que** le broyeur à eau (2) présente un bord de fuite (11) derrière la fente annulaire (8).

4. Appareil de traitement de l'eau (1) selon une des revendications précédentes, **caractérisé en ce que** la fente annulaire (8) présente une largeur de 2 µm à 20 µm, de préférence de 2 µm à 10 µm, à la sortie (9).

5. Appareil de traitement de l'eau (1) selon une des revendications précédentes, **caractérisé en ce que** le stator (5) est fixé à une plaque de base à l'aide d'au moins un moyen de fixation, le stator (5) étant fixé à la plaque de base de manière mobile radialement.

6. Appareil de traitement de l'eau (1) selon une des revendications précédentes, **caractérisé en ce que** le dispositif de pompage (3) est un dispositif de pompage externe ou interne ou une combinaison des deux, de préférence exclusivement un dispositif de pompage interne.

7. Appareil de traitement de l'eau (1) selon la revendication 6, **caractérisé en ce que** le dispositif de pompage interne est composé d'une roue à ailettes (12) à l'entrée et/ou d'une pale d'extraction (13) à la sortie (9), la pale d'extraction (13) s'étendant sur la circonférence du plateau de sortie (14).

8. Appareil de traitement de l'eau (1) selon une des revendications précédentes, **caractérisé en ce que** la profondeur de denture sur le rotor (4) diminue jusqu'à devenir nulle dans la direction d'écoulement vers la sortie (9) et/ou diminue jusqu'à devenir nulle sur le stator (5) dans la direction d'écoulement vers l'anneau diffuseur.

9. Appareil de traitement de l'eau (1) selon une des revendications précédentes, **caractérisé en ce que** le rotor (4) présente un arbre d'entraînement (16) et est entraîné par un moteur d'entraînement, de préférence par un moteur électrique (15).

10. Procédé de traitement de l'eau, comprenant au moins les étapes suivantes :
a. entrée de l'eau dans un réservoir de stockage,
b. pompage de l'eau, avec mise sous pression, vers un étage d'épuration préliminaire physico-mécanique,
c. épuration préliminaire physico-mécanique de l'eau dans l'étage d'épuration préliminaire,
d. traitement de l'eau dans un appareil de traitement de l'eau selon une des revendications 1 à 9, les organismes présents dans l'eau étant tués à cette occasion, et
e. transport de l'eau dans un autre réservoir de stockage.

11. Procédé selon la revendication 10, **caractérisé en ce que**, dans une autre étape f. précédant le transport (e.), un traitement ultérieur physique, chimique et/ou biologique de l'eau est réalisé dans le réservoir d'eau.

12. Procédé selon une des revendications 10 ou 11, **caractérisé en ce qu'**il permet de traiter de l'eau de mer, en particulier de l'eau de ballast.

13. Procédé selon une des revendications 10, 11 ou 12, **caractérisé en ce que** l'eau à l'étape a. est transportée dans une prise d'eau de mer et à l'étape e. dans un réservoir d'eau de ballast ou à l'étape a. dans un réservoir d'eau de ballast et à l'étape e. dans une prise d'eau de mer.

14. Procédé selon une des revendications 10 à 13, **caractérisé en ce que** l'étage d'épuration préliminaire physico-mécanique est un filtre, une installation de filtration ou un hydrocyclone.
